Europäisches Patentamt

European Patent Office

Office européen des brevets

(11) Numéro de publication: **0 251 911**
**A1**

## (12) DEMANDE DE BREVET EUROPEEN

(21) Numéro de dépôt: **87401479.8**

(22) Date de dépôt: **26.06.87**

(51) Int. Cl.⁴: **G 01 B 3/12**

(30) Priorité: **03.07.86 FR 8609657**

(43) Date de publication de la demande:
**07.01.88 Bulletin 88/01**

(84) Etats contractants désignés:
**AT BE CH DE ES GB GR IT LI LU NL SE**

(71) Demandeur: **Menetrieux, Stéphane**
**1, Avenue d'Aligre**
**F-78230 Le Pecq (FR)**

**Chamaillard, Guy**
**313, Rue Lecourbe**
**F-75015 Paris (FR)**

**Menetrieux, Claude**
**5 Passage de l'Industrie**
**F-92130 Issy les Moulineaux (FR)**

(72) Inventeur: **Menetrieux, Stéphane**
**1, Avenue d'Aligre**
**F-78230 Le Pecq (FR)**

**Chamaillard, Guy**
**313, Rue Lecourbe**
**F-75015 Paris (FR)**

**Menetrieux, Claude**
**5 Passage de l'Industrie**
**F-92130 Issy les Moulineaux (FR)**

(74) Mandataire: **Tony-Durand, Serge**
**Cabinet Tony-Durand 22, Boulevard Voltaire**
**F-75011 Paris (FR)**

(54) **Petit appareil pour la mesure de longueurs.**

(57) Petit appareil de mesure pour la mesure de longueurs, du type constitué par un petit boîtier ou similaire susceptible d'être tenu à la main.

Cet appareil est pourvu d'une roulette de mesure (2) portant sur l'une de ses deux faces ou sur son pourtour, une série d'éléments de repère (5) présentant des caractéristiques de réflexion différentes de celles de la surface sur laquelle ceux-ci sont prévus. En regard de ces repères, il est prévu un système de détection à effet lumineux comprenant, d'une part un composant photo-émetteur dont le rayon émis est dirigé vers un point déterminé de défilement de ces repères, et d'autre part un organe récepteur du rayonnement réfléchi. Ces deux organes sont de préférence groupés sous forme d'un module unique relié à un module de comptage ainsi qu'à un module d'affichage comportant un écran (6) disposé sur l'une des faces externes du boîtier.

Cet appareil permet de relever rapidement la valeur de longueurs à mesurer.

Fig.1

EP 0 251 911 A1

Bundesdruckerei Berlin

**Description**

"Petit appareil pour la mesure de longueurs"

La présente invention concerne les petits appareils conçus pour être tenus à la main et qui sont destinés à permettre la mesure rapide et facile de longueurs, par exemple les dimensions d'une surface déterminée.

En général ces appareils sont constitués par un petit boîtier ou similaire qui est pourvu d'une roulette de mesure destinée à être déplacée au contact de la surface à mesurer, cette roulette présentant une série d'éléments de repères surveillés par un système électronique de détection commandant un système afficheur dont l'écran est disposé sur l'une des faces du boîtier.

Ainsi le brevet US 4.383.301 décrit un appareil de ce genre dont le boîtier renferme une roulette rotative qui fait légèrement saillie à l'un de ses côtés. Les repères prévus sur cette roulette consistent en une succession de petites ouvertures. En un point déterminé du défilement de celle-ci, il est prévu, de part et d'autre de la roulette, une source de lumière et une cellule photo électrique raccordée au circuit d'un système de comptabilisation et d'affichage. Cependant cette solution a pour inconvénient que certains des organes du système de détection se trouvent situés d'un côté de la roulette de mesure et les autres organes du côté opposé. Or ceci entraîne une complication de la structure et de la fabrication des boîtiers des appareils de ce genre, avec tous les inconvénients qui en découlent, notamment en ce qui concerne leur prix de revient.

Une solution similaire existe dans certains petits appareils de mesure, du type des curvimètres, qui sont plus spécialement destinés au relevé de distances sur des cartes géographiques ou analogues. Ainsi, la demande GB 2.074.312 décrit un appareil de mesure conçu pour un tel usage et qui répond à une solution du même genre. On y retrouve donc les mêmes inconvénients que précédemment. De plus les appareils conçus pour le relevé de distances sur des cartes géographiques ne sont pas susceptibles d'être utilisés pour la mesure des dimensions d'une surface déterminée dans un bâtiment ou similaire. En effet, leur roulette de mesure est de trop faible diamètre et leur conception générale ne se prête pas à un tel usage.

C'est pourquoi la présente invention a pour but de réaliser un petit appareil spécialement destiné à la mesure de longueurs pour des calculs de surfaces dans le bâtiment ou des applications similaires, et qui est conçu de manière à être beaucoup plus simple que les appareils actuellement existant afin de présenter un prix de revient inférieur à ceux-ci tout en assurant des performances supérieures. Du reste l'invention a également pour but d'apporter un certain nombre de perfectionnements au présent appareil par rapport aux appareils actuels du type en cause.

A cet effet l'invention a pour objet un petit appareil pour la mesure de longueurs, du type constitué par un petit boîtier ou similaire susceptible d'être tenu à la main et qui est pourvu d'une roulette de mesure destinée à être déplacée au contact de la surface ou de la pièce à mesurer, cette roulette portant une série d'éléments de repère surveillés par un système électronique de détection raccordé à un système de comptabilisation commandant un système afficheur dont l'écran est disposé sur l'une des faces du boîtier, caractérisé en ce que :
- les éléments de repère prévus sur la roulette de mesure consistent en une succession de zones espacées - par exemple en forme de bandes radiales, de pastilles circulaires ou similaires - qui présentent des caractéristiques de réflexion différentes de celles de la surface sur laquelle ces repères sont prévus,
- le système de détection est un système à effet lumineux comprenant, en regard du passage de ces repères, d'une part un composant photo-émetteur dont le rayon émis est dirigé vers un point déterminé de défilement de ces repères, et d'autre part un organe récepteur du rayonnement réfléchi.

Selon une autre caractéristique de cet appareil, le système de comptabilisation de celui-ci est agencé pour incorporer la valeur de la largeur du boîtier aux mesures affichées.

Selon une autre caractéristique encore, le circuit électronique est apte à assurer respectivement le comptage de la valeur d'une longueur dans le sens normal de mesure, et le décomptage de la distance de retour en arrière.

Cependant d'autres particularités et avantages de l'appareil de mesure selon l'invention apparaitront au cours de la description suivante. Celle-ci est donnée en référence au dessin annexé à simple titre indicatif, et sur lequel :

La figure 1 est une vue en perspective d'un appareil de mesure selon l'invention.

La figure 2 est un schéma fonctionnel du système de mesure et d'affichage prévu dans cet appareil.

La figure 3 est une vue partielle en élévation de face de la roulette de mesure, laquelle vue correspond à une variante de réalisation.

Le présent appareil de mesure comporte un petit boîtier 1 susceptible d'être aisément tenu à la main et dont les dimensions sont suffisamment restreintes pour que celui-ci puisse être aisément rangé dans la poche d'un vêtement. Ce boîtier est muni d'une roulette de mesure 2, montée librement rotative et qui fait saillie à l'extérieur à travers une ouverture 3 de ce boîtier. De préférence le pourtour de cette roulette comporte des striures transversales 4 ou tout autre état de surface susceptible d'éviter un glissement sur la surface à mesurer.

Sur l'une de ses faces, cette roulette 2 porte une série de bandes radiales 5 présentant des caractéristiques de réflexion qui sont différentes de celles de la surface correspondante de la roulette. Ces bandes radiales constituent les repères prévus sur la roulette pour la détermination des longueurs mesurées. A cet effet, les bandes radiales 5 ainsi prévues sont régulièrement espacées et leur espacement correspond à un déplacement angulaire déterminé de la roulette de mesure.

Ces bandes radiales peuvent être rapportées sur la face correspondante de la roulette 2 après fabrication de celle-ci. Cependant elles peuvent également être incorporées dans le corps de cette roulette au cours de sa fabrication, notamment si celle-ci est réalisée par moulage en matière plastique. Au lieu d'affecter l'aspect des bandes radiales, les repères prévus sur l'une des faces de la roulette de mesure peuvent consister en une succession de pastilles circulaires régulièrement espacées. Mais ces repères pourraient également affecter tout autre forme appropriée.

Par ailleurs, le boîtier 1 renferme un circuit électronique destiné à coopérer avec cette roulette de mesure pour afficher les mesures relevées, directement sur un écran d'affichage 6 prévu sur l'une des faces externes de ce boîtier.

Ce circuit comporte en premier lieu un système de détection du défilement des repères 5 prévus sur la roulette de mesure. Ce système est constitué par la combinaison d'un photo-émetteur 18a dont le rayon émis est dirigé vers un point déterminé de défilement des repères 5 portés par la roulette 2, et d'un organe récepteur 18b apte à recevoir le rayonnement réfléchi par la face correspondante de cette roulette (voir figure 2). Ces deux organes sont disposés en regard de la face de la roulette de mesure 2 sur laquelle sont prévus les repères 5, donc sur un même côté du boîtier par rapport à cette roulette. De préférence ces deux organes de détection sont groupés sous forme d'un module unique 8. Ce module est donc apte à détecter le passage de chaque repère 5 au point de défilement correspondant, et ce du fait des caractéristiques particulières de reflexion de ces repères qui sont différentes de celles de la surface correspondante de la roulette.

Ainsi, lors du passage de chaque repère 5, l'organe récepteur 18a émet un signal en direction du reste du circuit, plus précisément en direction d'un module 9 de mise en forme de ce signal qui génerera un ordre de comptage.

Cependant le circuit électronique comporte également un système de comptabilisation qui comprend un module sommateur 10 et un module compteur 11. Ces deux modules sont reliés l'un à l'autre et à un système afficheur comprenant l'écran d'affichage 6 déjà mentionné. Mais il est en outre prévu un module 12 de mise en fonctionnenment relié à un module 13 d'initialisation. Ce dernier module est relié au module sommateur 10, cependant que le module 12 de mise en fonctionnement est relié directement au module compteur 11 pour assurer automatiquement la remise à zéro de celui-ci lors de chaque nouvelle utilisation de l'appareil.

Bien entendu, il est par ailleurs prévu une ou plusieurs piles électriques d'alimentation qui sont montées amovibles à l'intérieur du boîtier 1 et sont destinées à assurer l'alimentation du circuit électronique en étant branchées dans le module 12 de mise en fonctionnement. Ce dernier est commandé par un interrupteur 14 qui est actionné par un bouton de commande 15 disposé sur l'une des parois externes du boîtier 1.

Ainsi qu'il a déjà été indiqué, le présent appareil est destiné à être utilisé en faisant rouler sa roulette de mesure 2 au contact de la surface ou de la pièce à mesurer. Or l'agencement est tel que le déplacement angulaire de cette roulette, qui résulte d'une telle opération, se traduit par l'affichage direct de la longueur correspondante sur l'écran 6. Ceci est obtenu par le fait qu'à chaque passage d'une bande de repère 5 l'organe récepteur 18b du module de détection 8 envoie un signal vers le système de comptabilisation. En conséquence à tout moment la longueur mesurée se trouve directement affichée sur l'écran 6, et ce d'une façon extrêmement visible.

Du fait de la conception du système de détection constitué par le module 8, tous les organes de celui-ci se trouvent disposés d'un même côté par rapport à la roulette de mesure 2, et non pas de part et d'autre de celle-ci comme cela est le cas dans certains appareils de mesure actuels du même genre. Or le regroupement de tous les organes de détection dans un même module a pour avantage de simplifier non seulement le système de détection lui-même, mais également la structure générale de l'appareil puisqu'il suffit simplement de prévoir, en regard de la roulette 2, un logement destiné à recevoir le module 8 de détection. De plus ceci supprime de nombreux organes de liaison électrique qui sans cela auraient été nécessaires. Il en résulte donc une réduction considérable du prix de revient de l'appareil qui présente par ailleurs des perfectionnements importants par rapport aux appareils actuels du même genre.

A ce sujet il convient de noter que la fiabilité du présent appareil est plus grande que celle des appareils dans lesquels le système de détection est constitué par deux organes complémentaires (une source lumineuse et une cellule photo-électronique) situés de part et d'autre d'une roulette comportant une succession de trous ou des zones transparentes. En effet dans ces appareils il est nécessaire qu'il y ait une concordance rigoureuse des positions respectives des deux organes constitutifs du système de détection de part et d'autre de la roulette de mesure, ce qui complique la fabrication et grève le prix de revient.

Pour faciliter l'utilisation du présent appareil pour la mesure d'une longueur comprise entre deux angles, par exemple la mesure d'un mur, il est avantageusement prévu un système d'initialisation 13 assurant, de façon automatique, l'ajout de la valeur de la largeur L du boîtier 1, à la distance parcourue par la roulette, cette somme étant affichée sur l'écran 6. Dans un tel cas il peut être prévu, sur l'une des faces externes du boîtier, un curseur 16 de commutation qui peut être placé soit dans une position A mettant en fonctionnement ce système d'initialisation, soit dans une position B ne faisant pas intervenir ce système. Dans ce dernier cas, l'appareil doit être utilisé en plaçant la partie saillante de la roulette de mesure au contact du début de la longueur à mesurer et en la faisant rouler jusqu'à l'extrémité même de celle-ci. Par contre, lorsque le système d'initialisation mentionné ci-dessus est en service, l'appareil doit être utilisé en le plaçant initialement dans une position telle que son bord arrière soit à l'aplomb du départ de la longueur à mesurer et en le déplaçant jusqu'à ce que son bord avant soit lui-même à l'aplomb de l'autre extrémité de cette même longueur.

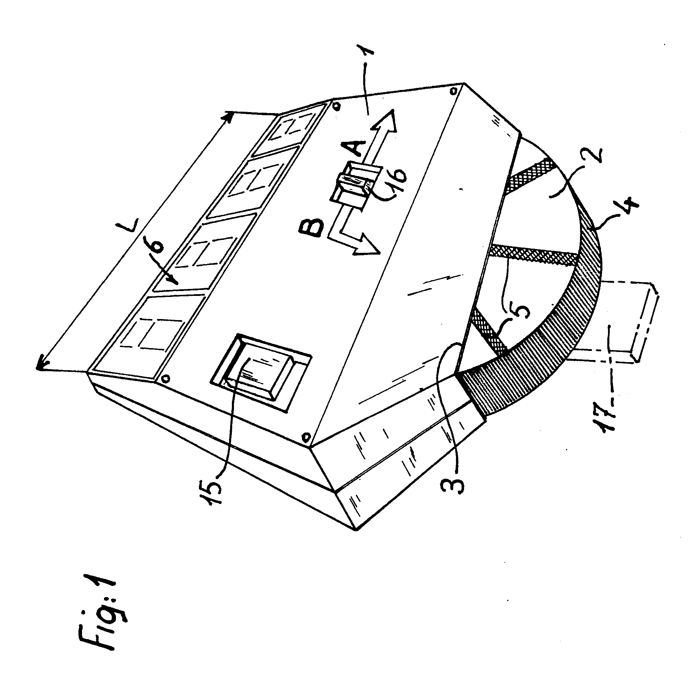

Pour faciliter la mesure de certaines surfaces, par exemple la surface d'une table ou similaire, le boîtier 1 est pourvu d'une patte escamotable 17 destinée à servir de guide le long de la surface à mesurer dans sa position saillante de travail (représentée à la figure 1). Cependant cette patte peut être escamotée lorsqu'elle n'est pas utilisée.

De façon avantageuse, l'appareil peut être pourvu d'un système de validation des ordres de comptage, ce système étant déclenché par pression de la roue sur la surface à mesurer.

Dans une version perfectionnée, le présent appareil peut être équipé d'un module électronique simplifié de calcul permettant d'afficher le produit de deux longueurs mesurées l'une à la suite de l'autre afin de connaître immédiatement la valeur d'une surface à mesurer. Dans un tel cas, l'appareil comporte une mémoire apte à enregistrer la première longueur mesurée, après quoi dès la mesure de la seconde longueur, on peut obtenir l'affichage de la surface correspondante sur l'écran 6. Une opération similaire peut être réalisée pour le calcul du volume d'un local déterminé en mesurant successivement les trois longueurs voulues.

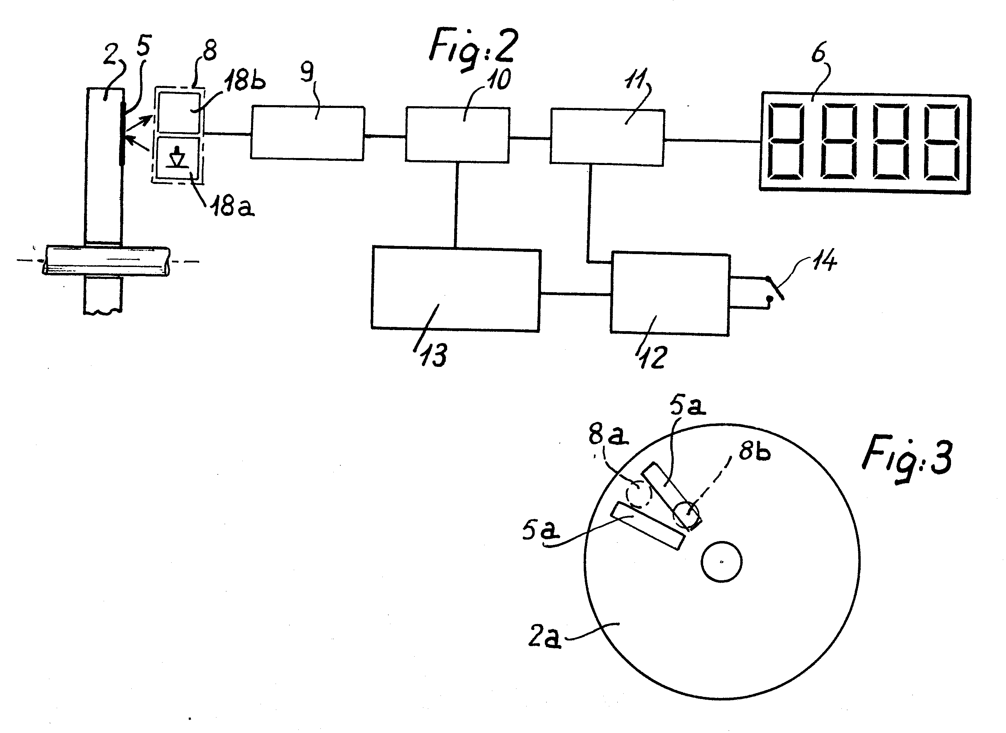

Dans une variante avantageuse de réalisation, qui est partiellement illustrée à la figure 3, le présent appareil peut être agencé de manière à assurer aussi bien le comptage que le décomptage d'une longueur, de façon à permettre une rectification immédiate lorsque l'appareil a été déplacé au-delà de la longueur à mesurer, le décomptage nécessaire étant assuré par le simple retour en arrière de l'appareil. A cet effet, il est alors prévu deux modules de détection disposés en regard du passage des repères 5a portés par la roulette de mesure correspondante 3a, ces deux modules étant schématisés par les cercles 8a et 8b. Cependant pour permettre la reconnaissance du sens de rotation de la roulette de mesure par le système de détection, il est prévu un certain décalage des positions relatives des deux modules 8a et 8b par rapport aux repères 5a. Le sens de rotation de la roulette peut donc être déterminé par analyse du phasage des signaux issus des deux modules de détection.

Bien entendu le présent appareil peut faire l'objet de diverses modifications. Ainsi, la roulette de mesure peut présenter une forme différente, par exemple une forme creuse sur l'une de ses faces. La position des repères 5 peut être également modifiée de même que celle du module de détection 8.

Par ailleurs la roulette de mesure peut être montée dans le boîtier de façon à être aisément démontable pour son nettoyage. Du reste ceci est facilité par le fait que tous les organes du système de détection se trouvent situés sur un même côté par rapport à cette roulette. D'autre part le boîtier peut être avantageusement pourvu d'un organe tel qu'un collier ou une douille permettant de l'adapter au bout d'une canne télescopique de manoeuvre, la fixation pouvant être assurée par exemple par un cône autobloquant.

Comme il a déjà été indiqué, les principaux avantages de l'appareil de mesure selon l'invention résident dans la facilité d'utilisation et de lecture de celui-ci, dans sa fiabilité et son faible prix de revient.

En raison de ces avantages cet appareil peut être utilisé avec profit dans tous les cas où il convient de mesurer rapidement une longueur. Il peut donc être employé avantageusement dans de nombreuses circonstances, notamment par des artisans pour mesurer la longueur d'une pièce d'appartement ou de ses murs, afin d'établir des devis pour l'exécution de certains travaux. Mais évidemment, cet appareil est susceptible de nombreuses autres utilisations.

**Revendications**

1. Petit appareil pour la mesure de longueurs, du type constitué par un petit boîtier ou similaire susceptible d'être tenu à la main et qui est pourvu d'une roulette de mesure destinée à être déplacée au contact de la surface ou de la pièce à mesurer, cette roulette portant une série d'éléments de repère surveillés par un système électronique de détection raccordé à un système de comptabilisation commandant un système afficheur dont l'écran est disposé sur l'une des faces du boîtier, caractérisé en ce que :
- les éléments de repère prévus sur la roulette de mesure (2) consistent en une succession de zones espacées (5) - par exemple en forme de bandes radiales ou non, de pastilles circulaires, ou similaires - qui présentent des caractéristiques de réflexion différentes de celles de la surface sur laquelle ces repères sont prévus,
- le système de détection est un système à effet lumineux comprenant, en regard du passage de ces repères, d'une part un composant photo-émetteur (18a) dont le rayon émis est dirigé vers une zone déterminée de défilement de ces repères, et d'autre part un organe (18b) récepteur du rayonnement réfléchi.

2. Petit appareil de mesure selon la revendication 1, caractérisé en ce que les deux éléments (18a et 18b) constituant le système de détection sont groupés sous forme d'un module unique (8) branché dans le circuit de l'ensemble des autres systèmes électroniques de l'appareil.

3. Petit appareil de mesure selon l'une des revendications précédentes caractérisé en ce que le système de comptabilisation est agencé pour incorporer, la valeur de la largeur du boîtier, aux mesures affichées.

4. Petit appareil de mesure selon l'une des revendications précédentes caractérisé en ce que le circuit électronique est apte à assurer respectivement le comptage de la valeur d'une longueur dans le sens normal de mesure, et le décomptage de la disance de retour en arrière.

5. Petit appareil de mesure selon l'une des revendications précédentes caractérisé en ce que son boîtier (1) porte une patte saillante escamotable (17) apte à servir de guide pour une mesure effectuée le long du bord d'une surface.

6. Petit appareil de mesure selon l'une des revendications précédentes, caractérisé en ce qu'il comporte un système de validation des ordres de comptage, ce système étant déclenché par pression de la roulette de mesure sur la surface à mesurer.

7. Petit appareil de mesure selon l'une des revendications précédentes, caractérisé en ce que son boîtier est agencé pour pouvoir être adapté au bout d'une canne de manoeuvre, la fixation étant assurée par un système de blocage.

8. Petit appareil de mesure selon l'une des revendications précédentes, caractérisé en ce que la roue de mesure (2) est montée dans le boîtier de façon à être aisément démontable pour son nettoyage.

Fig:1

Fig:2

Fig:3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 383 301 (D.I. MORITA) <br> * Colonne 2, lignes 44-58; colonne 3, lignes 3-32; colonne 4, lignes 58-60; figures * | 1 | G 01 B 3/12 |
| A | WO-A-8 505 175 (RIJLAARSDAM) <br> * Page 4, lignes 1-20; figures * | 1,6 | |
| A | US-A-4 275 264 (ELECTRONIC MODULES CORP.) <br> * Figures; résumé * | 1 | |
| D,A | GB-A-2 074 312 (R.P. STANBURY) <br> * Page 2; page 3, ligne 26; figures * | 1,4 | |
| A | US-A-4 009 339 (VARIAN) <br> * Colonne 3, ligne 60 - colonne 4, ligne 11; figures * | 1,6 | DOMAINES TECHNIQUES RECHERCHES (Int. Cl.4) <br><br> G 01 B |
| A | MC-A-29 061 268 (C. GUILLAUD) <br> * En entier * | 3 | |
| A | FR-A-1 259 470 (LAGIER) <br> * Figure 3 * | 5 | |

Le présent rapport de recherche a été établi pour toutes les revendications

| Lieu de la recherche | Date d'achèvement de la recherche | Examinateur |
|---|---|---|
| LA HAYE | 11-10-1987 | RAMBOER P. |